# EUROPÄISCHE PATENTSCHRIFT

(11) **EP 3 645 901 B1**
(45) Veröffentlichungstag und Bekanntmachung des Hinweises auf die Patenterteilung: **15.09.2021**
(21) Anmeldenummer: 18737215.6
(22) Anmeldetag: 29.06.2018
(51) Int. Cl.: F16C 17/04, F16C 21/00, F16C 23/04, F16C 17/26, F16C 17/10, F03D 80/70

(54) **WINDENERGIEANLAGEN-DREHVERBINDUNG, UND WINDENERGIEANLAGE MIT SELBIGER**
ROTATIONAL CONNEXION ASSEMBLY FOR A WIND TURBINE AND WIND TURBINE WITH SUCH AN ASSEMBLY
CONNECTION TOURNANTE POUR UNE ÉOLIENNE ET ÉOLIENNE AVEC UNE TELLE CONNECTION

(30) Priorität: 29.06.2017 DE 102017114584
(43) Veröffentlichungstag der Anmeldung: 06.05.2020
(73) Patentinhaber: Wobben Properties GmbH, 26607 Aurich (DE)
(72) Erfinder: MTAUWEG, Samer, 27568 Bremerhaven (DE)
(74) Vertreter: Eisenführ Speiser
(86) Internationale Anmeldenummer: PCT/EP2018/067609
(87) Internationale Veröffentlichungsnummer: WO 2019/002564

(56) Entgegenhaltungen:
- EP-A1- 2 955 413
- WO-A1-2013/091664
- DE-A1- 3 502 963
- DE-A1-102012 004 329

## Beschreibung

Die vorliegende Erfindung betrifft eine Windenergieanlagen-Gleitdrehverbindung für zwei um eine Rotationsachse relativ zueinander drehbare Windenergieanlagenteile, mit einem kombinierten Axial-Radiallager, wobei das Axial-Radial-Lager eine axiale Lagerkomponente und eine separate radiale Lagerkomponente aufweist.

Drehverbindungen der vorbezeichneten Art sind allgemein bekannt. Mit ihnen werden beispielsweise Rotorblätter an der Rotorblattnabe gelagert, damit eine Pitchbewegung der Rotorblätter gewährleistet werden kann. Weiter werden beispielsweise die Rotorblattnabe und/oder der Generatorrotor einer Windenergieanlage und/oder eine Hauptwelle der Windenergieanlage mit Hilfe von Drehverbindungen gelagert, beispielsweise an einem Maschinenträger der Windenergieanlage. Weiter wird beispielsweise der Maschinenträger der Windenergieanlage mittels einer als Azimutlagerung bezeichneten Drehverbindung am Turm der Windenergieanlage drehbeweglich gelagert.

Die Drehverbindung dient jeweils vornehmlich dazu, die auf die drehbeweglich zueinander gelagerten Windenergieanlagenteile wirkenden axialen und radialen Kräfte aufzunehmen, sowie in bestimmten Anwendungsfällen auch zur Aufnahme von Kippmomenten.

Im Stand der Technik sind zur drehbeweglichen Lagerung von Anlagenteilen mit hohen Bewegungsgeschwindigkeiten bisweilen Gleitlagerungen vorgeschlagen worden, während bei Drehbewegungen mit hohen Standzeiten oder geringer Rotationsgeschwindigkeit, dafür aber hohen Belastungen vornehmlich Wälzlagerungen vorgesehen wurden.

Eine allgemeine Herausforderung in der Konzeption von Windenergieanlagen wird zunehmend darin gesehen, die Dauerfestigkeit der Windenergieanlagenteile zu gewährleisten, während gleichzeitig ein möglichst hoher Wirkungsgrad in der Bereitstellung elektrischer Energie erreicht werden soll. Letzteres soll nach Möglichkeit mit fortwährenden Gewichtsoptimierungen der Windenergieanlagen und einer Minderung von Geräuschemissionen vereint werden, was bisweilen Zielkonflikte mit sich bringt.

Das Deutsche Patent- und Markenamt hat in der Prioritätsanmeldung zu vorliegender Anmeldung folgenden Stand der Technik recherchiert: DE 10 2012 004 329 A1, DE 10 2015 217 510 A1, DE 10 2015 224 912 A1, EP 2 871 377 B1, und WO 2008/ 152 083 A1.

Der Erfindung lag folglich die Aufgabe zugrunde, eine Windenergieanlage-Drehverbindung vorzuschlagen, die die vorstehend benannten Nachteile möglichst weitgehend überwindet und dabei die bestehenden Zielkonflikte möglichst auflöst. Insbesondere lag der Erfindung die Aufgabe zugrunde, eine Windenergieanlagen-Drehverbindung mit einem alternativen Lagerungskonzept anzugeben. Weiter lag der Erfindung insbesondere die Aufgabe zugrunde, eine Windenergieanlagen-Drehverbindung vorzuschlagen, die zur Minderung von Geräuschemissionen beiträgt, und vorzugsweise einen reduzierten Drehwiderstand bei unverminderter Verschleißbeständigkeit gewährleistet.

Die Erfindung löst die ihr zugrundeliegende Aufgabe bei einer Windenergieanlagen-Drehverbindung der eingangs bezeichneten Art, indem die axiale Lagerkomponente als Gleitlagerkomponente mit einer ersten, konvex gewölbten Lagerfläche und einer korrespondierenden zweiten, konkav gewölbten Lagerfläche ausgebildet ist.

Die Erfindung macht sich die Erkenntnis zunutze, dass eine derartige axiale Lagerkomponente, auch bezeichnet als Kalottenlagerung, sehr hohe axiale Kräfte im Vergleich zur Baugröße aufnehmen kann, und gleichwohl eine hohe Winkeltoleranz für die Richtung der einwirkenden Kräfte aufweist.

Dadurch, dass die axiale Lagerkomponente als Gleitlagerkomponente ausgebildet ist, entfallen jedenfalls diesbezüglich die Abrollgeräusche, die im Stand der Technik bei Wälzkörpern unweigerlich erzeugt werden, was zu einer Reduktion der Geräuschemissionen insgesamt beiträgt.

Die Erfindung wird dadurch vorteilhaft weitergebildet, was wenigstens eine der beiden Lagerflächen der axialen Lagerkomponenten teilweise oder vollständig aus einem Faserverbundwerkstoff ausgebildet ist. Besonders bevorzugt ist eine der beiden Lagerflächen der axialen Lagerkomponente teilweise oder vollständig aus einem Faserverbundwerkstoff ausgebildet, und die andere der beiden Lagerflächen der axialen Lagerkomponente ist teilweise oder vollständig aus einem metallischen Werkstoff ausgebildet. Die Werkstoffpaarung aus metallischem Werkstoff und Faserverbundwerkstoff liefert äußerst günstige Verschleißeigenschaften, insbesondere Notlaufeigenschaften.

In einer bevorzugten Ausführungsform sind die axiale Lagerkomponente, die radiale Lagerkomponente oder beide Lagerkomponenten (die axiale Lagerkomponente und die radiale Lagerkomponente) ringförmig ausgebildet. Dies erhöht die Flexibilität hinsichtlich des Einbaus der Drehverbindung signifikant, da im Zentrum der Rotation ein Durchgang geschaffen werden kann bzw. die Möglichkeit der Montage auf beispielsweise einer Hauptwelle etc.

In einer ersten bevorzugten Alternative ist die radiale Lagerkomponente als Wälzlagerung ausgebildet.

In einer zweiten bevorzugten Alternative ist die radiale Lagerkomponente ebenfalls als Gleitlagerung ausgebildet, insbesondere ausgewählt aus einem der folgenden Lagertypen: Zylindrisches Gleitlager, Mehrflächen-Gleitlager, insbesondere Zitronenspiellager, oder segmentiertes Gleitlager, vorzugsweise mit Kippsegmenten. Unter einem Zitronenspiellager wird ein mehrflächen-Gleitlager mit einem Außenring verstanden, der anstelle eines kreisförmigen Querschnitts einen aus zwei oder mehr bogenförmigen Keilflächen zusammengesetzten Querschnitt aufweist, so dass sich entlang des Gleitspaltenumfangs Bereiche mit unterschiedlichen Spaltweiten ergeben.

In einer weiteren bevorzugten Ausgestaltung der erfindungsgemäßen Drehverbindung ist das kombinierte Axial-Radial-Lager ein erstes Lager, und die Drehverbindung weist zusätzlich ein zweites Lager auf.

Besonders bevorzugt ist das zweite Lager ebenfalls ein kombiniertes Axial-Radial-Lager mit einer axialen und einer separaten rein radialen Lagerkomponente, wobei die axiale Lagerkomponente als Gleitlagerkomponente mit einer ersten, konvex gewölbten Lagerfläche und einer korrespondierten zweiten, konkav gewölbten Lagerfläche ausgebildet ist.

Vorzugsweise ist bei dem zweiten Lager wenigstens eine der beiden Lagerflächen der axialen Lagerkomponente teilweise oder vollständig aus einem Faserverbundwerkstoff ausgebildet. Weiter vorzugsweise ist bei dem zweiten Lager eine der beiden Lagerflächen der axialen Lagerkomponente teilweise oder vollständig aus einem Faserverbundwerkstoff ausgebildet ist, und die andere der beiden Lagerflächen der axialen Lagerkomponente ist teilweise oder vollständig aus einem metallischen Werkstoff ausgebildet.

Weiter vorzugsweise ist bei dem zweiten Lager die axiale Lagerkomponente ringförmig ausgebildet. Weiter vorzugsweise ist bei dem zweiten Lager die radiale Lagerkomponente ringförmig ausgebildet. Weiter vorzugsweise ist bei dem zweiten Lager die radiale Lagerkomponente als Wälzlagerung ausgebildet. Alternativ ist vorzugsweise bei dem zweiten Lager die radiale Lagerkomponente als Gleitlagerung ausgebildet, insbesondere ausgewählt aus einem der folgenden Lagertypen: zylindrisches Gleitlager, Zitronenspiellager, segmentiertes Gleitlager, vorzugsweise mit Kippsegmenten.

In einer weiteren bevorzugten Ausführungsform der Drehverbindung sind das erste und das zweite kombinierte Axial-Radial-Lager direkt aneinander angrenzend und mit den axialen Lagerkomponenten benachbart zueinander angeordnet. Alternativ sind vorzugsweise das erste und das zweite kombinierte Axial-Radial-Lager direkt aneinander angrenzend und mit den radialen Lagerkomponenten benachbart zueinander angeordnet.

In einer weiteren bevorzugten Alternative sind das erste und das zweite kombinierte Axial-Radial-Lager zueinander beabstandet angeordnet. Durch die Beabstandung insbesondere der radialen Lagerkomponenten voneinander über die Aufnahmefähigkeit von Kippmomenten der Drehverbindung signifikant erhöht. Die direkt aneinander angrenzende Anordnung der beiden kombinierten Axial-Radial-Lager lässt sich vorteilhaft als Momentenlagerung verwenden.

Besonders bevorzugt wird die Ausführungsform mit direkt aneinander angrenzend angeordneten kombinierten Axial-Radial-Lagern dadurch weitergebildet, dass die Drehverbindung ferner ein drittes Lager aufweist, welches zu der Anordnung des ersten und zweiten Axial-Radial-Lagers beabstandet angeordnet ist, wobei das dritte Lager vorzugsweise ein radiales Lager ist. Besonders bevorzugt ist das dritte Lager ringförmig ausgebildet, und insbesondere als Gleitlagerung. Vorzugsweise ist die Gleitlagerung ausgewählt aus einem der folgenden Lagertypen:
Zylindrisches Gleitlager, Zitronenspiellager, segmentiertes Gleitlager, vorzugsweise mit Kippsegmenten.

Diese Ausgestaltung kann nach Vorbild einer Fest-Los-Lagerung an der Windenergieanlage verwendet werden.

Die Erfindung betrifft in einem weiteren Aspekt eine Windenergieanlage mit folgenden Anlagenteilen:
Eine Anzahl von Rotorblättern, einer Rotorblattnabe, an der die Rotorblätter vorzugsweise drehbeweglich, montiert sind, einem Generator, welcher einen Generatorrotor und einen Generatorstator aufweist, wobei der Generatorrotor und die Rotorblattnabe mittels einer Hauptwelle, und vorzugsweise eines Getriebes, miteinander gekoppelt sind, einem Maschinenträger, den der Generator, insbesondere der Generatorstator, montiert ist, und einem Turm, auf dem der Maschinenträger angeordnet ist.

Die Erfindung löst die eingangs formulierte Aufgabe bei einer Windenergieanlage der vorbezeichneten Art, indem eines, mehrere oder sämtliche der Anlagenteile mittels einer Drehverbindung nach einem der vorstehend beschriebenen bevorzugten Ausführungsformen drehbeweglich gelagert sind. Besonders bevorzugt sind bei der Windenergieanlage die Rotorblätter an der Rotorblattnabe drehbeweglich gelagert. Alternativ oder zusätzlich ist die Rotorblattnabe und/oder der Generatorrotor und/oder die Hauptwelle an dem Generatorstator gelagert. Alternativ oder zusätzlich ist die Rotorblattnabe und/oder der Generator und/oder die Hauptwelle an dem Maschinenträger drehbeweglich gelagert.

Alternativ oder zusätzlich ist der Maschinenträger an dem Turm drehbeweglich gelagert. Hinsichtlich der Vorteile der bevorzugten Ausführungsformen der Windenergieanlage und ihrer Drehverbindung wird auf die vorstehend beschriebenen bevorzugten Ausführungsformen gemäß dem ersten Aspekt verwiesen.

Vorzugsweise ist die Drehverbindung zur Lagerung der Rotorblattnabe und/oder des Generators und/oder der Hauptwelle an dem Generatorstator oder dem Maschinenträger als hydrodynamische Gleitdrehverbindung ausgebildet. Hierdurch lassen sich insbesondere auch höhere Drehzahlen verschleißarm oder sogar im Wesentlichen verschleißfrei realisieren.

In einer weiteren bevorzugten Ausführungsform, in der die Drehverbindung zur Lagerung der Rotorblätter an der Rotorblattnabe und/oder zur Lagerung des Maschinenträgers an dem Turm der Windenergieanlage ausgebildet ist, ist die Drehverbindung vorzugsweise als trockenlaufende Gleitdrehverbindung ausgebildet. Die Drehzahl bei dieser Art von Lagerungen ist vergleichsweise gering, und die Standzeiten sind vergleichsweise hoch, so dass thermische Schmierung nicht notwendig ist bzw. keine Vorteile verspricht. Hier kommen aber besonders die Notlaufeigenschaften der weiter oben beschriebenen bevorzugten Werkstoffpaarung aus einem Faserverbundwerkstoff und einem metallischen Werkstoff zum Tragen.

Die Erfindung wird im Folgenden unter Bezugnahme auf die beigefügten Figuren anhand bevorzugter Ausführungsbeispiele näher beschrieben. Hierbei zeigen:
- Figur 1: eine schematische räumliche Darstellung einer Windenergieanlage,
- Figur 2a: eine schematische Schnittdarstellung einer Gondel der Windenergieanlage aus Figur 1 gemäß einem ersten bevorzugten Ausführungsbeispiel,
- Figur 2b: eine sich schematische Schnittdarstellung einer Gondel der Windenergieanlage aus Figur 1 gemäß einem zweiten bevorzugten Ausführungsbeispiel,
- Figuren 3a,b: schematische Querschnittzeichnungen einer erfindungsgemäßen Drehverbindung in zwei bevorzugten Ausgestaltungen, für eine Windenergieanlage gemäß Figur 2a oder 2b,
- Figuren 4a-f: verschiedene bevorzugte schematische Lageranordnungen der Drehverbindungen gemäß Figuren 3a, b für eine Windenergieanlage gemäß Figur 2a oder 2b.

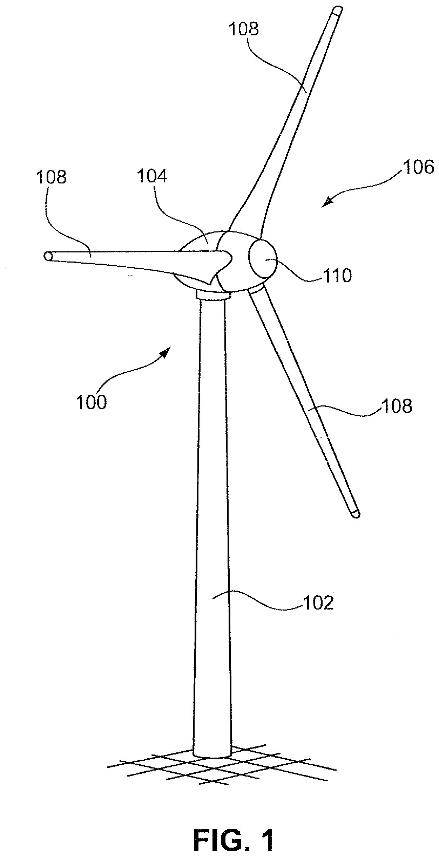

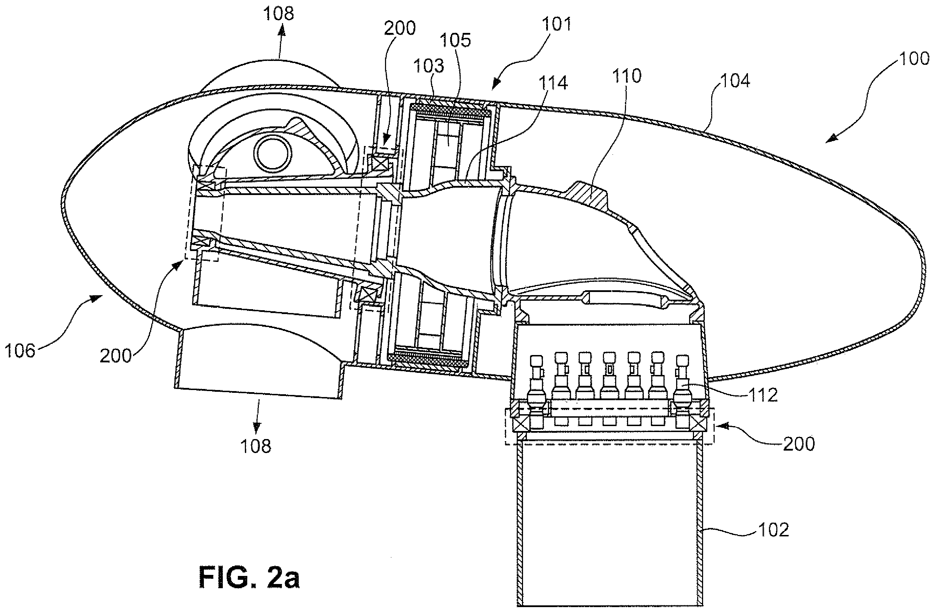

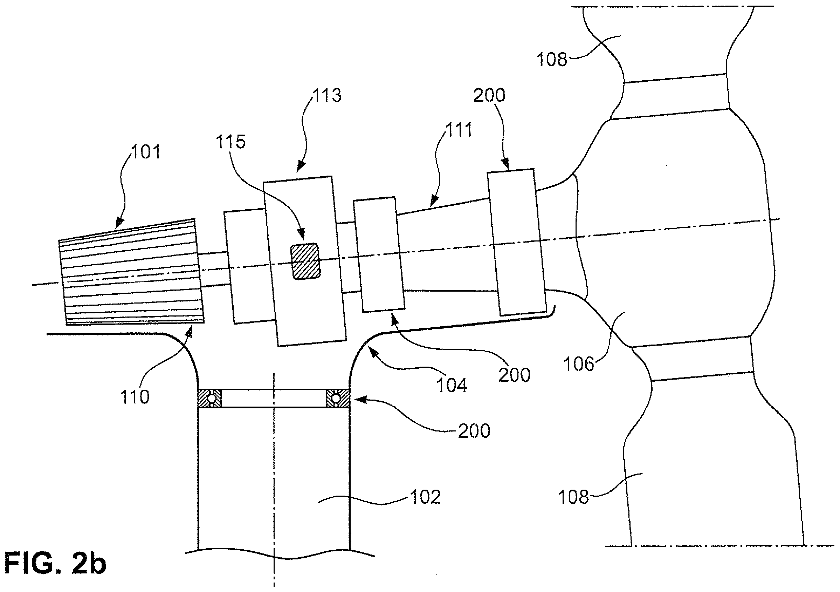

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator 101 (Figur 2) in der Gondel 104 an.

Die Gondel 104 ist in Figur 2 in einer Schnittansicht gezeigt. Die Gondel 104 ist drehbar an dem Turm 102 montiert und mittels eines Azimutantriebs 112 in allgemein bekannterWeise angetrieben verbunden. In der Gondel 104 ist ein Maschinenträger 110 ebenfalls in allgemein bekannter Weise angeordnet, der einen Achszapfen 114 trägt.

Der Generator 101 weist einen Generatorstator 105 auf, der mittels des Achszapfens 114 an dem Maschinenträger 110 in der Gondel 104 befestigt ist. Andere, durch die Erfindung nicht ausgeschlossene Ausgestaltungsmöglichkeiten sehen beispielsweise vor, den Generatorstator 105 unmittelbar an den Maschinenträger 110 oder ein entsprechendes Bauteil der Gondel 104 anzubinden.

Der Generator 101 gemäß Figur 2a weist einen Generatorrotor 103 auf, der als Außenläufer konzipiert ist. Die Rotorblätter 108 sind mit einer erfindungsgemäßen Drehverbindung 200 drehbeweglich zu der Nabe 106 gelagert.

Die Nabe 106 und der Generatorrotor 103 sind mittels einer Drehverbindung 200 drehbeweglich zu dem Achszapfen 114 gelagert.

Der Maschinenträger 110 - und mit ihm die Gondel 104 - sind mittels einer Drehverbindung 200 drehbeweglich zu dem Turm 102 gelagert.

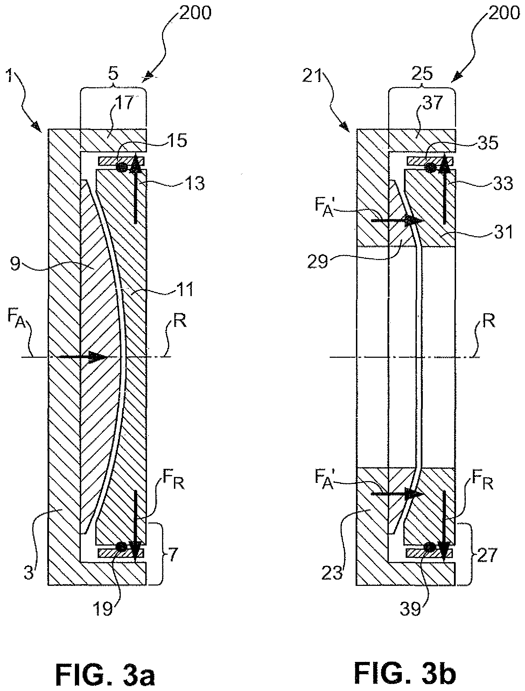

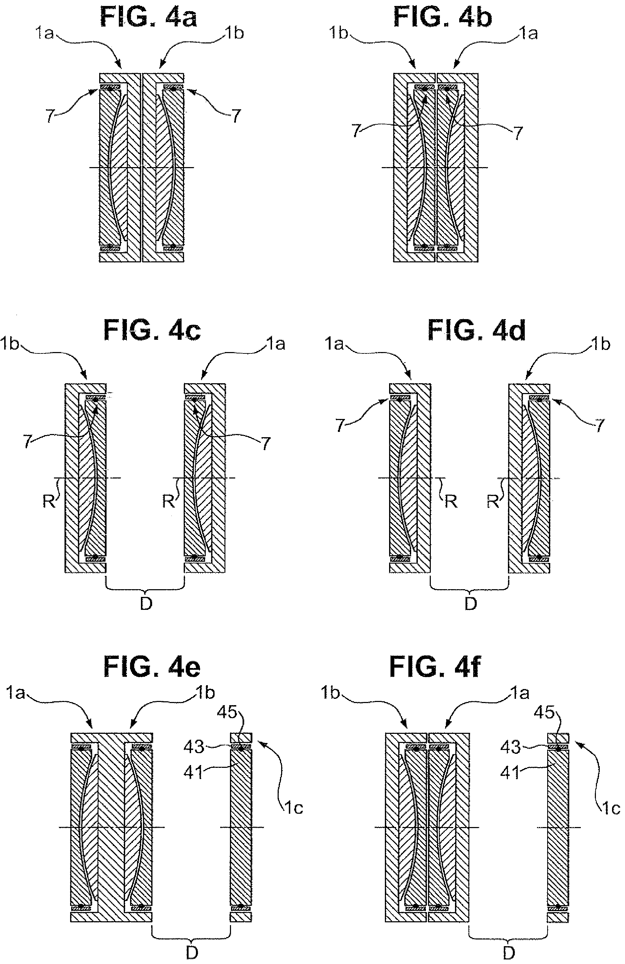

Eine, mehrere oder sämtliche der in Figur 2 angedeuteten Drehverbindungen 200 sind vorzugsweise gemäß den Figuren 3a,b oder 4a-f ausgebildet, die nachfolgend näher beschrieben werden.

Während in Figur 2a eine Windenergieanlage 100 mit einem Außenläufergenerator dargestellt wurde, zeigt Figur 2b eine alternative Ausführungsform mit einem Getriebegenerator. Der Generator 101 weist vorzugsweise einen Innenläufer als Generatorrotor auf, welcher drehfest mit einer Hauptwelle 111 verbunden ist. Zwischen den Generator 101 und die Hauptwelle 111 ist vorzugsweise ein Getriebe 113 zwischengeschaltet. Das Getriebe 113 ist vorzugsweise mittels einer Drehmomentstütze 115 mit dem Maschinenträger 110 oder anderen strukturellen Bauteilen der Gondel 104 der Windenergieanlage 100 verbunden. An der Hauptwelle 111 ist ferner drehfest die Nabe 106 befestigt, und an ihr die Rotorblätter 108, soweit prinzipgleich wie in Figur 2a.

Die Hauptwelle ist mittels einer Drehverbindung 200 an der Gondel 104 gelagert.

Ferner ist die Gondel 104 mittels eines Azimutlagers, dass ebenfalls als Drehverbindung 200 gekennzeichnet ist, drehbar am Turm 102 befestigt.

Auch bezüglich des Ausführungsbeispiels der Figur 2b wird auf die nachfolgenden Figuren 3a,b und 4a-f verwiesen, die verschiedene Konfigurationsmöglichkeiten für die Drehverbindungen 200 zeigen.

In Figur 3a ist eine Drehverbindung 200 gemäß einer ersten bevorzugten Ausgestaltung abgebildet. Die Drehverbindung 200 weist ein kombiniertes Axial-Radial-Lager 1 auf. Das Lager 1 weist einen Grundkörper 3 auf, der als Träger fungiert. An den Träger 3 sind eine axiale Lagerkomponente 5 und eine radiale Lagerkomponente 7 ausgebildet. Die axiale Lagerkomponente 5 weist eine erste, konvex geformte Lagerfläche 9 und einen zweite, korrespondierende konkav geformte Lagerfläche 11 auf.

Radial außerhalb und bezogen auf eine Rotationsachse R axial benachbart, weist die Drehverbindung einen Innenring 13 und einen Außenring 17 für die radiale Lagerkomponente 7 auf. Vorzugsweise sind an den Innenring 13 oder an den Außenring 17 (nicht dargestellt) eine Vielzahl von Gleitlagersegmenten 15 ausgebildet und besonders bevorzugt sind die Gleitlagersegmente 15 mittels eines Kippmechanismus 19 schwenkbar am Innenring 13 (oder alternativ am Außenring 17, nicht dargestellt) angeordnet.

Das kombinierte Axial-Radial-Lager 1 gemäß Figur 3a ist vorteilhaft dazu eingerichtet, in Richtung der Rotationsachse R wirkende Axialkräfte F_{A} aufzunehmen sowie senkrecht dazu wirkende Radialkräfte F_{R}.

Figur 3b zeigt eine alternative Ausgestaltung zu dem kombinierten Axial-Radial-Lager 1 gemäß Figur 3a. Das in Figur 3b gezeigte kombinierte Axial-Radial-Lager 21 weist einen Träger 23 auf, der ringförmig ausgebildet ist. An dem Träger 23 ist eine Axiallagerkomponente 25 mit einer radialen Lagerkomponente 27 ausgebildet, wobei die axiale Lagerkomponente 25 ebenfalls ringförmig ausgebildet ist. Die axiale Lagerkomponente 25 weist eine erste, konvex gewölbte Lagerfläche 29 auf und eine korrespondierende zweite, konkav gewölbte Lagerfläche 31. Radial außerhalb und axial benachbart zu diesen Lagerflächen weist das Axial-Radial-Lager 21 einen Innenring 33 und einen Außenring 37 der radialen Lagerkomponente 27 auf. Ferner sind eine Vielzahl von Gleitlagersegmenten 35 vorgesehen, die analog zur Darstellung gemäß Fig. 3a als Kippsegemente mit einem Schwenkmechanismus 39 am Innenring 33 ausgebildet sind (aber alternativ auch am Außenring 37 ausgebildet sein können).

Die axialen Kräfte F'_{A} werden im Wesentlichen funktionsgleich zu der Darstellung gemäß Figur 3a von der axialen Lagerkomponente 25 aufgenommen, während die in radialer Richtung wirkenden Kräfte F_{R} von der radialen Lagerkomponente 27 aufgenommen werden.

In den Figuren 4a, b, c. d, e und f sind bevorzugte Anordnungen des Axial-Radial-Lagers 1 gemäß Figur 3a gezeigt. Es soll verstanden werden, dass alternativ zum Axial-Radial-Lager auch das Axial-Radial-Lager 21 in gleicher Weise angeordnet werden kann. Die Anordnung gemäß Figur 3a und Figur 3b zeigt jeweils ein erstes kombiniertes Axial-Radial-Lager 1a und zweites kombiniertes Axial-Radial-Lager 1b, welche jeweils direkt aneinander angrenzend angeordnet sind. Gemäß Darstellung aus Figur 3a sind die beiden kombinierten Axial-Radial-Lager 1a, b derart zueinander ausgerichtet, dass die radialen Lagerkomponenten 7 voneinander abgewandt angeordnet sind. In der Darstellung gemäß Figur 3b sind die beiden kombinierten Axial-Radial-Lager 1a, b derart ausgerichtet, dass die radialen Lagerkomponenten 7 einander zugewandt ausgerichtet sind. Die Anordnung gemäß den Figuren 4a, b eignet sich besonders für eine Momentenlagerung.

Die Aufnahmefähigkeit für Kippmomente wird ausgehend von Anordnungen wie beispielsweise Figur 4a und 4b weiter erhöht, wenn die beiden kombinierten Axial-Radial-Lager 1a, b voneinander beabstandet werden.

Solche Ausgestaltungen zeigen beispielhaft die Figuren 4c, d. Hier ist jeweils das erste kombinierte Axial-Radial-Lager 1a um einen vorbestimmten Abstand D von dem zweiten kombinierten Axial-Radial-Lager 1b beabstandet. Wie auch in den Figuren 4a, b sind hier jeweils Ausgestaltungen gezeigt, in denen die radialen Lagerkomponenten 7 einander zugewandt sind (Figur 4c) oder voneinander abgewandt sind (Figur 4d). Die Lageranordnung gemäß den Figuren 4c, d eigenen sich besonders als Stützlagerung.

In den Figuren 4e, f werden in Weiterführung der vorstehend bereits beschriebenen Lagerkonzepte zwei Vorschläge unterbreitet, die zusätzlich zu den beiden kombinierten Axial-Radiallagerungen 1a, b ein drittes Lager 1c aufweisen. Die beiden kombinierten Axial-Radiallagerungen 1a, b sind analog zu den Figuren 4a, b direkt aneinander angrenzend angeordnet, während das dritte Lager 1c in einem vorbestimmten Abstand D zu diesen beabstandet angeordnet ist. Diese Lagerart eignet sich vorzugsweise für eine Fest-Loslagerung.

Das dritte Lager 1c ist in der dargestellten Variante als Radialgleitlager ausgebildet, wobei an einem Innenring 41 eine Vielzahl von Gleitlagersegmenten 43 angeordnet sind, besonders bevorzugt als Kippsegmente, die mit einem Schwenkmechanismus 45 an dem Innenring 41 befestigt sind.

## Patentansprüche

1. Windenergieanlagen-Drehverbindung (200) für zwei um eine Rotationsachse (R) relativ zueinander drehbare Windenergieanlagenteile (102, 110; 103, 105; 106, 114; 108, 106), mit einem kombinierten Axial-Radial-Lager (1, 21; 1a, 1b), wobei das Axial-Radial-Lager eine axiale Lagerkomponente (5, 25), und eine separate radiale Lagerkomponente (7, 27) aufweist,
**dadurch gekennzeichnet, dass** die axiale Lagerkomponente (5, 25) als Gleitlagerkomponente mit einer ersten, konvex gewölbten Lagerfläche (9, 29) und einer korrespondierenden zweiten, konkav gewölbten Lagerfläche (11, 31) ausgebildet ist.

2. Drehverbindung (200) nach Anspruch 1,
wobei wenigstens eine der beiden Lagerflächen (9, 11; 29, 31) der axialen Lagerkomponente (5, 25) teilweise oder vollständig aus einem Faserverbundwerkstoff ausgebildet ist.

3. Drehverbindung (200) nach Anspruch 1,
wobei eine der beiden Lagerflächen (9, 11; 29, 31) der axialen Lagerkomponente (5, 25) teilweise oder vollständig aus einem Faserverbundwerkstoff ausgebildet ist, und die andere (11, 9; 31, 29) der beiden Lagerflächen der axialen Lagerkomponente (5, 25) teilweise oder vollständig aus einem metallischen Werkstoff ausgebildet ist.

4. Drehverbindung (200) nach einem der vorstehenden Ansprüche,
wobei die axiale Lagerkomponente (5, 25) und/oder die radiale Lagerkomponente (7, 27) ringförmig ausgebildet ist.

5. Drehverbindung (200) nach einem der vorstehenden Ansprüche,
wobei die radiale Lagerkomponente (7, 27) als Wälzlagerung ausgebildet ist.

6. Drehverbindung (200) nach einem der Ansprüche 1 bis 4,
wobei die radiale Lagerkomponente (7, 27) als Gleitlagerung ausgebildet ist, insbesondere ausgewählt aus einem der folgenden Lagertypen:
- zylindrisches Gleitlager,
- Zitronenspiellager,
- segmentiertes Gleitlager, vorzugsweise mit Kippsegmenten.

7. Drehverbindung (200) nach einem der vorstehenden Ansprüche,
wobei das kombinierte Axial-Radial-Lager (1, 21) ein erstes Lager (1a) ist, und die Drehverbindung zusätzlich ein zweites Lager (1b) aufweist.

8. Drehverbindung (200) nach Anspruch 7,
wobei das zweite Lager (1b) ebenfalls ein kombiniertes Axial-Radial-Lager (1, 21) mit einer axialen (5, 25) und einer separaten radialen Lagerkomponente (7, 27) ist, wobei die axiale Lagerkomponente als Gleitlagerkomponente mit einer ersten, konvex gewölbten Lagerfläche (9, 19) und einer korrespondierenden zweiten, konkav gewölbten Lagerfläche (11, 31) ausgebildet ist.

9. Drehverbindung (200) nach Anspruch 8,
wobei das erste und das zweite Axial-Radial-Lager (1a, 1b) direkt aneinander angrenzend und mit den axialen Lagerkomponenten (5, 25) benachbart zueinander angeordnet sind.

10. Drehverbindung (200) nach Anspruch 8,
wobei das erste und das zweite Axial-Radial-Lager (1a, 1b) direkt aneinander angrenzend und mit den radialen Lagerkomponenten (7, 27) benachbart zueinander angeordnet sind.

11. Drehverbindung (200) nach Anspruch 7 oder 8,
wobei das erste und das zweite Axial-Radial-Lager (1a, 1b) zueinander beabstandet angeordnet sind.

12. Drehverbindung (200) nach Anspruch 9 oder 10,
mit einem dritten Lager (1c), welches zu der Anordnung des ersten und zweiten Axial-Radiallagers beabstandet angeordnet ist, wobei
das dritte Lager (1c) vorzugsweise ein radiales Lager ist.

13. Windenergieanlage (100), mit folgenden Anlagenteilen:
einer Anzahl von Rotorblättern (108),
einer Rotorblattnabe (106), an der die Rotorblätter (108), drehbeweglich, montiert sind,
einem Generator (101), welcher einen Generatorrotor (103) und einen Generatorstator (105) aufweist, wobei der Generatorrotor (103) und die Rotorblattnabe (106) direkt oder mittels einer Hauptwelle, und vorzugsweise eines Getriebes, miteinander gekoppelt sind,
einem Maschinenträger (110), an dem der Generator (101), insbesondere der Generatorstator (105), montiert ist, und einem Turm (102), auf dem der Maschinenträger (110) angeordnet ist,
**dadurch gekennzeichnet, dass** einer, mehrere oder sämtliche der Anlagenteile, mittels einer Drehverbindung (200) nach einem der vorstehenden Ansprüche drehbeweglich gelagert sind.

14. Windenergieanlage (100) nach Anspruch 13,
wobei die Drehverbindung (200) zur Lagerung der Rotorblattnabe (106) und/oder des Generatorrotors (103) und/oder der Hauptwelle an dem Generatorstator (105) oder dem Maschinenträger (110) als hydrodynamische Gleitdrehverbindung ausgebildet ist.

15. Windenergieanlage (100) nach Anspruch 13 oder 14,
wobei die Drehverbindung (200) zur Lagerung der Rotorblätter (108) an der Rotorblattnabe (106) und/oder die Drehverbindung (200) zur Lagerung des Maschinenträgers (110) an dem Turm (102) als trockenlaufende Gleitdrehverbindung ausgebildet ist.

## Claims

1. A wind turbine rotary connection (200) for two wind turbine components (102, 110; 103, 105; 106, 114; 108, 106) which are rotatable relative to each other, having a combined axial-radial bearing (1, 21; 1a, 1b), wherein the axial-radial bearing has an axial bearing component (5, 25) and a separate radial bearing component (7, 27),
**characterised in that** the axial bearing component (5, 25) is in the form of a plain bearing component having a first convexly curved bearing surface (9, 29) and a corresponding second concavely curved bearing surface (11, 31).

2. A rotary connection (200) according to claim 1
wherein at least one of the two bearing surfaces (9, 11; 29, 31) of the axial bearing component (5, 25) is formed partially or completely from a fibre composite material.

3. A rotary connection (200) according to claim 1
wherein one of the two bearing surfaces (9, 11; 29, 31) of the axial bearing component (5, 25) is formed partially or completely from a fibre composite material and the other (11, 9; 31, 29) of the two bearing surfaces of the axial bearing component (5, 25) is formed partially or completely from a metallic material.

4. A rotary connection (200) according to one of the preceding claims
wherein the axial bearing component (5, 25) and/or the radial bearing component (7, 27) is of an annular configuration.

5. A rotary connection (200) according to one of the preceding claims
wherein the radial bearing component (7, 27) is in the form of a rolling bearing.

6. A rotary connection (200) according to one of claims 1 to 4
wherein the radial bearing component (7, 27) is in the form of a plain bearing, in particular selected from one of the following bearing types:
- cylindrical plain bearing,
- a lemon bore bearing, and
- segmented plain bearing, preferably with tilt segments.

7. A rotary connection (200) according to one of the preceding claims
wherein the combined axial-radial bearing (1, 21) is a first bearing (1a) and the rotary connection additionally has a second bearing (1b).

8. A rotary connection (200) according to claim 7
wherein the second bearing (1b) is also a combined axial-radial bearing (1, 21) with an axial (5, 25) and a separate radial bearing component (7, 27), wherein the axial bearing component is in the form of a plain bearing component having a first convexly curved bearing surface (9, 19) and a corresponding second concavely curved bearing surface (11, 31).

9. A rotary connection (200) according to claim 8
wherein the first and the second axial-radial bearing (1a, 1b) are arranged in directly mutually adjoining relationship and with the axial bearing components (5, 25) in mutually adjacent relationship.

10. A rotary connection (200) according to claim 8
wherein the first and the second axial-radial bearing (1a, 1b) are arranged in directly mutually adjoining relationship and with the radial bearing components (7, 27) in mutually adjacent relationship.

11. A rotary connection (200) according to claim 7 or claim 8
wherein the first and the second axial-radial bearings (1a, 1b) are arranged in mutually spaced relationship.

12. A rotary connection (200) according to claim 9 or claim 10
comprising a third bearing (1c) arranged spaced in relation to the arrangement of the first and second axial-radial bearing, wherein
the third bearing (1c) is preferably a radial bearing.

13. A wind turbine (100) comprising the following components:
a number of rotor blades (108),
a rotor blade hub (106) to which the rotor blades (108) are rotatably mounted,
a generator (101) having a generator rotor (103) and a generator stator (105), wherein the generator rotor (103) and the rotor blade hub (106) are coupled together directly or by means of a main shaft and preferably a transmission,
a machine carrier (110) to which the generator (101), in particular the generator stator (105) is mounted, and a tower (102) on which the machine carrier (110) is arranged,
**characterised in that** one, a plurality of or all of the components are rotatably mounted by means of a rotary connection (200) according to one of the preceding claims.

14. A wind turbine (100) according to claim 13
wherein the rotary connection (200) for supporting the rotor blade hub (106) and/or the generator rotor (103) and/or the main shaft on the generator stator (105) or the machine carrier (110) is in the form of a hydrodynamic plain rotary connection.

15. A wind turbine (100) according to claim 13 or claim 14
wherein the rotary connection (200) for mounting the rotor blades (108) to the rotor blade hub (106) and/or the rotary connection (200) for mounting the machine carrier (110) to the tower (102) is in the form of a dry-running plain rotary connection.

## Revendications

1. Couronne d'orientation d'éolienne (200) pour deux parties d'éolienne (102, 110 ; 103, 105 ; 106, 114 ; 108, 106) pouvant tourner l'une par rapport à l'autre autour d'un axe de rotation (R), avec un palier axial-radial (1, 21 ; 1a, 1b) combiné, dans laquelle le palier axial-radial présente un composant de palier axial (5, 25), et un composant de palier radial (7, 27) séparé,
**caractérisée en ce que** le composant de palier axial (5, 25) est réalisé en tant que composant de palier lisse avec une première surface de palier (9, 29) bombée de manière convexe et une deuxième surface de palier (11, 31) bombée de manière concave correspondante.

2. Couronne d'orientation (200) selon la revendication 1
dans laquelle au moins une des deux surfaces de palier (9, 11 ; 29, 31) du composant de palier axial (5, 25) est réalisée partiellement ou entièrement à partir d'un matériau composite renforcé par des fibres.

3. Couronne d'orientation (200) selon la revendication 1,
dans laquelle une des deux surfaces de palier (9, 11 ; 29, 31) du composant de palier axial (5, 25) est réalisée partiellement ou entièrement à partir d'un matériau composite renforcé par des fibres, et l'autre (11, 9 ; 31, 29) des deux surfaces de palier du composant de palier axial (5, 25) est réalisée partiellement ou entièrement à partir d'un matériau métallique.

4. Couronne d'orientation (200) selon l'une quelconque des revendications précédentes,
dans laquelle le composant de palier axial (5, 25) et/ou le composant de palier radial (7, 27) est réalisé de manière annulaire.

5. Couronne d'orientation (200) selon l'une quelconque des revendications précédentes,
dans laquelle le composant de palier radial (7, 27) est réalisé en tant que logement à roulement.

6. Couronne d'orientation (200) selon l'une quelconque des revendications 1 à 4,
dans laquelle le composant de palier radial (7, 27) est réalisé en tant que logement lisse, en particulier choisi parmi un des types de paliers suivants :
- palier lisse cylindrique,
- palier citron,
- palier lisse segmenté, de préférence avec segments basculants.

7. Couronne d'orientation (200) selon l'une quelconque des revendications précédentes,
dans laquelle le palier axial-radial (1, 21) combiné est un premier palier (1a), et la couronne d'orientation présente en plus un deuxième palier (1b).

8. Couronne d'orientation (200) selon la revendication 7,
dans laquelle le deuxième palier (1b) est également un palier axial-radial (1, 21) combiné avec un composant de palier axial (5, 25) et un composant de palier radial (7, 27) séparé, dans laquelle le composant de palier axial est réalisé en tant que composant de palier lisse avec une première surface de palier (9, 19) bombée de manière convexe et une deuxième surface de palier (11, 31) bombée de manière concave correspondante.

9. Couronne d'orientation (200) selon la revendication 8,
dans laquelle le premier et le deuxième palier axial-radial (1a, 1b) sont disposés de manière directement adjacente l'un à l'autre et au voisinage les uns des autres avec les composants de palier axial (5, 25).

10. Couronne d'orientation (200) selon la revendication 8,
dans laquelle le premier et le deuxième palier axial-radial (1a, 1b) sont disposés de manière directement adjacente l'un à l'autre et au voisinage les uns des autres avec les composants de palier radial (7, 27).

11. Couronne d'orientation (200) selon la revendication 7 ou 8,
dans laquelle le premier et le deuxième palier axial-radial (1a, 1b) sont disposés à distance l'un de l'autre.

12. Couronne d'orientation (200) selon la revendication 9 ou 10,
avec un troisième palier (1c), lequel est disposé à distance de l'ensemble du premier et deuxième palier axial-radial, dans laquelle
le troisième palier (1c) est de préférence un palier radial.

13. Eolienne (100), avec les parties d'installation suivantes :
un nombre de pales de rotor (108),
un moyeu de pale de rotor (106), sur lequel les pales de rotor (108) sont montées de manière mobile en rotation,
un générateur (101), lequel présente un rotor de générateur (103) et un stator de générateur (105), dans laquelle le rotor de générateur (103) et le moyeu de pale de rotor (106) sont accouplés l'un à l'autre directement ou au moyen d'un arbre principal, et de préférence d'une transmission,
un support de machine (110), sur lequel le générateur (101), en particulier le stator de générateur (105), est monté, et une tour (102), sur laquelle le support de machine (110) est disposé,
**caractérisée en ce qu'**une, plusieurs ou toutes les parties d'installation sont logées de manière mobile en rotation au moyen d'une couronne d'orientation (200) selon l'une quelconque des revendications précédentes.

14. Eolienne (100) selon la revendication 13,
dans laquelle la couronne d'orientation (200) pour le logement du moyeu de pale de rotor (106) et/ou du rotor de générateur (103) et/ou de l'arbre principal sur le stator de générateur (105) ou le support de machine (110) est réalisée en tant que couronne d'orientation lisse hydrodynamique.

15. Eolienne (100) selon la revendication 13 ou 14,
dans laquelle la couronne d'orientation (200) pour le logement des pales de rotor (108) sur le moyeu de pale de rotor (106) et/ou la couronne d'orientation (200) pour le logement du support de machine (110) sur la tour (102) est réalisée en tant que couronne d'orientation lisse fonctionnant à sec.
